# EUROPÄISCHE PATENTSCHRIFT

(11) **EP 0 799 516 B1**
(45) Veröffentlichungstag und Bekanntmachung des Hinweises auf die Patenterteilung: **16.09.1998**
(21) Anmeldenummer: 95940078.9
(22) Anmeldetag: 21.12.1995
(51) Int. Cl.: H02H 9/04, H02H 3/04, H01H 83/04

(54) **ELEKTRISCHER SCHUTZSCHALTER**
ELECTRICAL CIRCUIT BREAKER
DISJONCTEUR DE PROTECTION

(30) Priorität: 23.12.1994 AT 2398/94
(43) Veröffentlichungstag der Anmeldung: 08.10.1997
(73) Patentinhaber: FELTEN & GUILLEAUME AUSTRIA AG, 3943 Schrems-Eugenia 1 (AT)
(72) Erfinder: MAYER, Karl-Heinz, A-1210 Wien (AT); NITSCH, Kurt, A-1210 Wien (AT)
(74) Vertreter: Hehenberger, Reinhard, Dipl.-Ing.
(86) Internationale Anmeldenummer: AT9500250
(87) Internationale Veröffentlichungsnummer: WO9620525

(56) Entgegenhaltungen:
- EP-A- 0 451 481
- EP-A- 0 497 752
- DE-A- 3 840 198
- DE-A- 4 112 169

## Beschreibung

Die Erfindung betrifft einen elektrischen Schutzschalter für wenigstens eine zu schützende Hauptleitung, mit einem gesondert elektrisch angespeisten Prüfkreis mit einer Prüftaste, und mit einer elektrischen Signaleinrichtung, welche bei einer Unterbrechung der Hauptleitung im Fehlerfall anspricht.

Es sind Ableiter-Trennschalter bekannt, die zusätzlich zur zu schützenden Hauptleitung mit einem Prüfkreis verbunden sind, um die Funktionsfähigkeit des Schalters überprüfen zu können. Weiters ist es bekannt, zusätzlich zum Ableiter-Trennschalter eine Einheit vorzusehen, die mit dem Ableiter-Trennschalter verbunden ist und in der eine elektrische Signaleinrichtung, z.B. ein Summer, angeordnet ist. Zur elektrischen Versorgung des Summers ist dabei eine gesonderte Anspeisung vorgesehen.

Aus der EP 0 350 477 A2 ist ein Schutzschalter bekannt, bei dem sowohl ein Prüfkreis mit einer Prüftaste als auch ein Signalkreis mit einer Signaleinrichtung vorgesehen sein können. Eine Kombination dieser beiden Kreise ist in dieser Veröffentlichung nicht angesprochen.

Aus der DE 38 40 198 A1 ist eine Steckdose mit Überspannungsschutz beschrieben, die eine Brückenschaltung aufweist, in der ein Schutzelement angeordnet ist. Fällt das Schutzelement aus, spricht eine Signaleinrichtung an, die über einen mechanischen Schalter abgeschaltet werden kann.

Aufgabe der vorliegenden Erfindung ist es, die bekannten Schutzschalter technisch zu vereinfachen.

Gelöst wird diese Aufgabe bei einem gattungsgemäßen Schutzschalter dadurch, daß die Signaleinrichtung über einen Schalter mit dem Prüfkreis elektrisch verbunden ist und daß der Schalter mit der Prüftaste mechanisch verbunden ist.

Durch die Erfindung wird der wesentliche Vorteil erzielt, daß für die Signaleinrichtung keine gesonderte elektrische Anspeisung vorgesehen sein muß, wodurch sich der Aufwand für die Verkabelung wesentlich verringern läßt. Des weiteren kann die ohnedies vorhandene Prüftaste einem weiteren Verwendungszweck dienen und der technische Aufwand für den Schutzschalter weiter verringert werden, da es oft wünschenswert ist, daß die Signaleinrichtung, insbesondere wenn sie als akustische Signaleinrichtung ausgeführt ist, abgeschaltet werden kann, um eine unnötige Störung von Betriebs- oder Wartungspersonal zu vermeiden. Aus dem Stand der Technik ist es bekannt, zu diesem Zweck einen eigenen Schalter vorzusehen, mit dem die Signaleinrichtung abgeschaltet werden kann, der erfindungsgemäß vermieden werden kann.

In einer Weiterbildung der Erfindung kann vorgesehen sein, daß die Signaleinrichtung im Gehäuse des Schutzschalters angeordnet ist. Dadurch, daß der Summer nunmehr im Gehäuse des elektrischen Schutzschalters selbst angeordnet ist, ist der Platzbedarf der gesamten Anordnung, d.h. des Schutzschalters und der Signaleinrichtung, insgesamt kleiner, so daß der Platzbedarf der gesamten Anordnung und auch der technische Aufwand für die Verkabelung verringert wird.

Vorzugsweise soll die Signaleinrichtung nur dann ansprechen, wenn der Schutzschalter aufgrund einer elektrischen Fehlerbedingung in der Hauptleitung anspricht, nicht jedoch, wenn der Schutzschalter über die Prüftaste ausgelöst wird. Wird die Anordnung so getroffen, daß die Signaleinrichtung vom Prüfkreis getrennt ist, wenn sich die Prüftaste in der gedrückten Stellung befindet, dann kann die Signaleinrichtung durch Drücken der Prüftaste abgeschaltet werden, wenn der Schutzschalter durch einen Fehler in der Hauptleitung angesprochen hat, bzw. spricht die Signaleinrichtung nicht an, wenn der Schutzschalter durch Drücken der Prüftaste auf seine Funktionsfähigkeit überprüft wird.

Weitere Merkmale und Vorteile der Erfindung ergeben sich aus den übrigen Unteransprüchen sowie der nachfolgenden Beschreibung eines Ausführungsbeispieles der Erfindung unter Bezugnahme auf die Zeichnungen. Es zeigt:

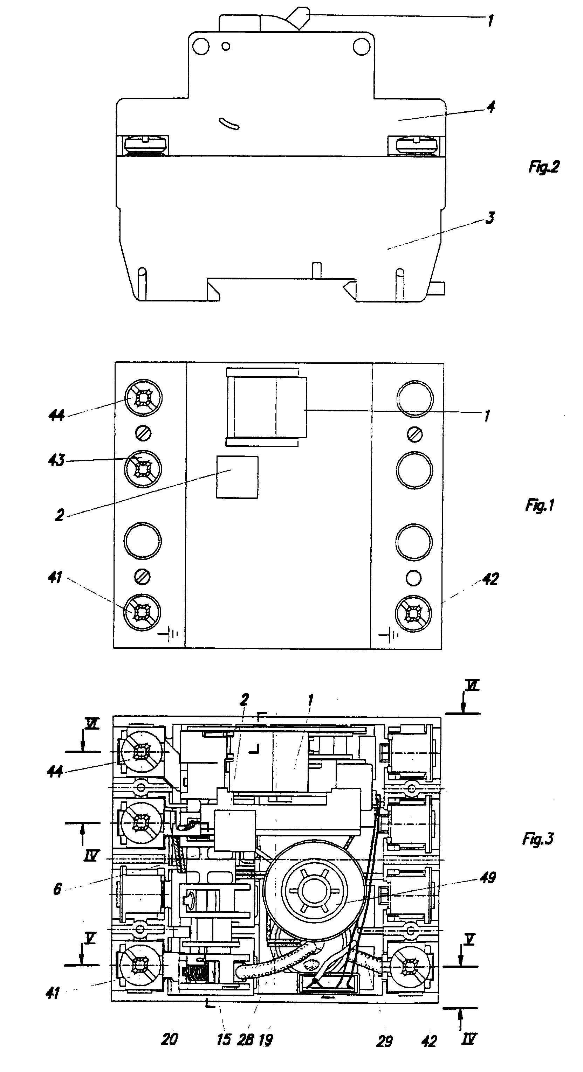

Fig. 1 eine Draufsicht auf einen erfindungsgemäßen Schutzschalter,
Fig. 2 eine Aufrißansicht des Schalters von Fig. 1,
Fig. 3 eine Draufsicht auf den Schalter mit abgenommenem Gehäusedeckel,
Fig. 4 einen Schnitt durch den Schalter von Fig. 3 entlang der Linie IV-IV,
Fig. 5 einen Schnitt durch den Schalter von Fig. 3 entlang der Linie V-V,
Fig. 6 einen Schnitt durch den Schalter von Fig. 3 entlang der Linie VI-VI,
Fig. 7 das elektrische Schaltbild des erfindungsgemäßen Schutzschalters,
Fig. 8 eine Ansicht der erfindungsgemäßen Prüftaste in vergrößertem Maßstab und
Fig. 9 eine Ansicht auf die Prüftaste von Fig. 8 von rechts.

In den Abbildungen ist ein erfindungsgemäßer, elektrischer Schutzschalter in Form eines Ableiter-Trennschalters dargestellt, wobei die Erfindung jedoch nicht auf einen derartigen Schalter beschränkt ist, sondern bei jedem beliebigen Schutzschalter, wie z.B. einem FI-Schalter oder Leitungsschutzschalter, anwendbar ist.

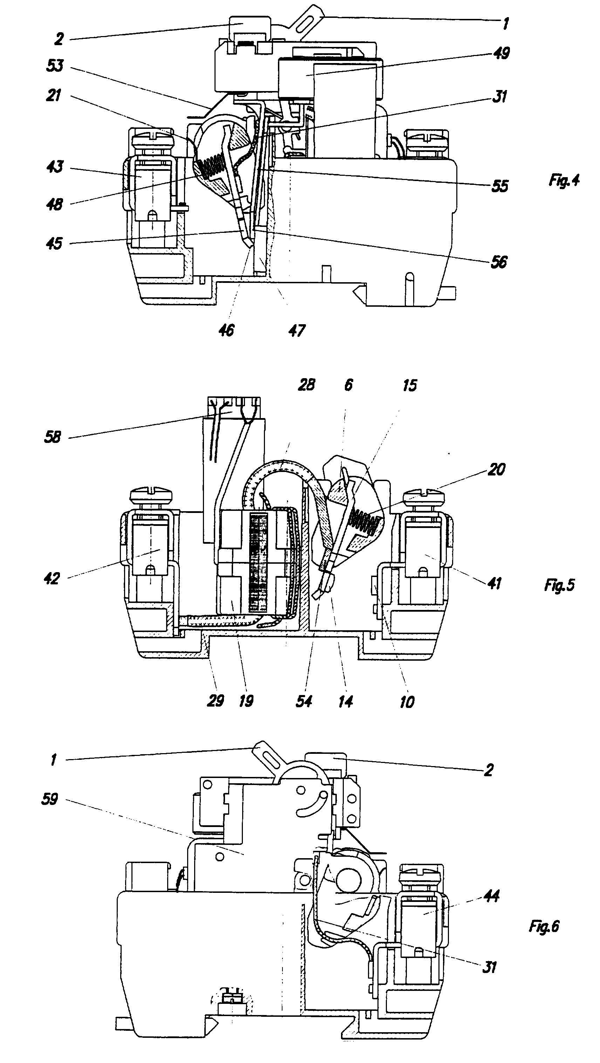

Der hier beschriebene Schalter weist eine Gehäusewanne 3, einen Gehäusedeckel 4 sowie in der Gehäusewanne zwei Anschlußklemmen 41, 42 für eine Hauptleitung und zwei Anschlußklemmen 43, 44 für einen Prüfkreis auf. Die Anschlußklemmen 41, 42 sind über einen Schalter, bestehend aus ortsfestem Kontakt 10 und beweglichem Kontakt 14, sowie ein Rundseil 28, 29 und einen als Ringbandkern 19 bezeichneten Trafo miteinander verbunden (sh. Fig. 5). Der bewegliche Kontakt 14 ist an einer Schaltbrücke 15 angeordnet, die auf an sich bekannte Weise in einer Schaltwalze 6 gelagert ist. Wird die Schaltwalze 6 beim Einschalten des Schutzschalters gegen den Uhrzeigersinn verdreht, kommt der bewegliche Kontakt 14 in Anlage an den ortsfesten Kontakt 10. Wird die Schaltwalze 6 in der Folge noch weiter verdreht, wird die Schaltbrücke 15 um ein Lager 54 an der Schaltwalze 6 verschwenkt, wodurch die Feder 20 zusammen und der bewegliche Kontakt 14 dadurch gegen den festen Kontakt 10 gedrückt wird.

Die Anschlußklemme 44 ist über ein Rundseil 31 mit einer Schaltbrücke 45 verbunden, welche ebenso wie die Schaltbrücke 15 der Hauptleitung in der Schaltwalze 6 gelagert ist. Im durch einen Fehlerstrom in der Hauptleitung ausgeschalteten Zustand des Schutzschalters liegt die Schaltbrücke 45 mit ihrer Spitze 46 von der Feder 48 belastet an einem ortsfesten Kontakt 47 an, der mit einer elektrischen Signaleinrichtung 49, z.B. einem Summer, verbunden ist. Der Summer 49 ist weiters über eine elektrische Leitung und eine Sicherung 50 mit der Anschlußklemme 43 verbunden.

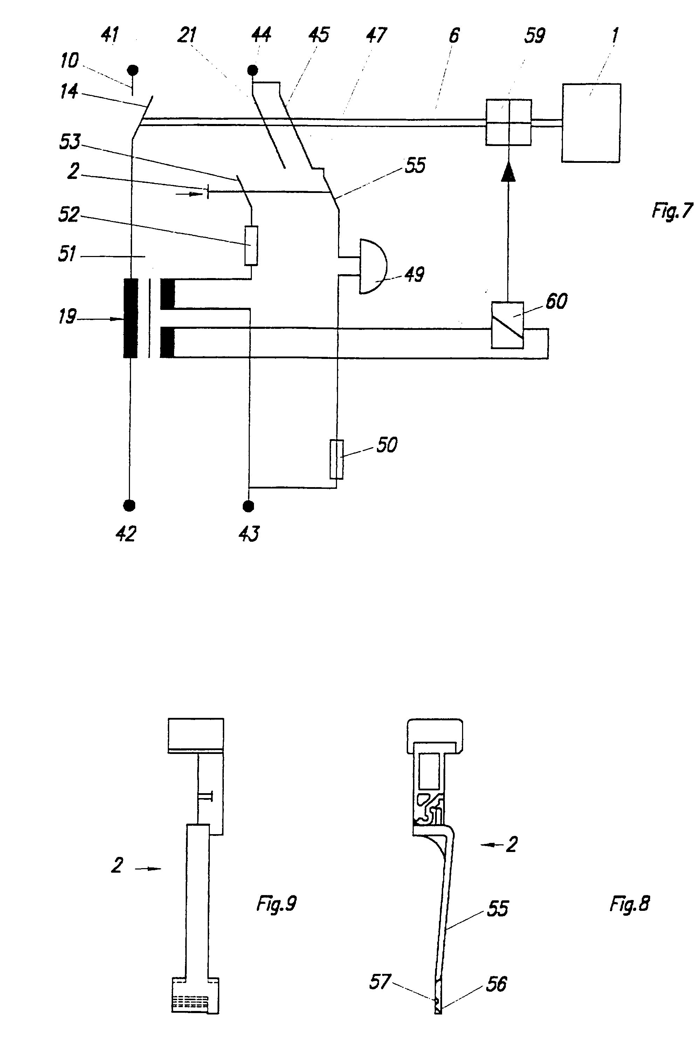

Mit der Anschlußklemme 43 ist weiters eine dem Ringbandkern 19 zugeordnete Spule 51 (Fig. 7) verbunden, die über einen Widerstand 52 mit einem beweglichen Kontakt 53 an der Prüftaste 2 elektrisch verbunden ist. Dem beweglichen Kontakt 53 an der Prüftaste 2 ist ein Kontakt 21 an der Schaltwalze 6 zugeordnet, der über die Feder 48, die Schaltbrücke 45 und das Rundseil 31 mit der Anschlußklemme 44 verbunden ist.

An der Prüftaste 2 ist eine Zunge 55 angeordnet, deren freies Ende bis in den Kontaktbereich zwischen der Spitze 46 der Schaltbrücke 45 und dem ortsfesten Kontakt 47 ragt. In Fig. 4 ist die Prüftaste 2 mit der Zunge 55 in der nicht gedrückten Stellung dargestellt, in welcher die Spitze 46 am Kontakt 47 anliegt. Wird die Prüftaste 2 gedrückt, so gleitet das freie Ende 56 der Zunge 55 zwischen die Spitze 46 und den Kontakt 47, so daß die elektrische Verbindung unterbrochen wird.

In der in Fig. 4 und Fig. 7 dargestellten Schaltstellung des Schutzschalters befindet sich der Schutzschalter in seiner AUS-Stellung und die Signaleinrichtung 49 ist aktiv. Sobald die Prüftaste 2 jedoch hineingedrückt wird, wird die elektrische Verbindung zwischen der Schaltbrücke 45 und dem ortsfesten Kontakt 47 durch die Zunge 55 getrennt und die Signaleinrichtung 49 außer Betrieb gesetzt.

Damit die Prüftaste nach dem Drücken in dieser Stellung verharrt, ist es möglich, eine Rastverbindung zwischen der Prüftaste 2 und einem beliebigen Teil des Schaltmechanismus des Schutzschalters herzustellen, die automatisch aufgehoben wird, wenn der Schaltmechanismus über den Betätigungsknopf 1 betätigt wird. In einer bevorzugten und in den Zeichnungen dargestellten Ausführungsform wird diese Rastverbindung zwischen einer im Bereich des freien Endes 56 der Zunge 55 angeordneten Nut 57 und der Spitze 46 der Schaltbrücke 45 hergestellt, wobei gleichzeitig die elektrische Anspeisung der Signaleinrichtung 49 unterbrochen wird.

Wird die Schaltwalze 6 durch Betätigen des Betätigungsknopfes 1 in Fig. 4 im Uhrzeigersinn verdreht, dann wird auch die Schaltbrücke 45 verdreht und die Spitze 46 gibt die Zunge 55 der Prüftaste 2 frei.

Durch die erfindungsgemäße Anordnung wird gleichzeitig auch ein wesentlicher Sicherheitsaspekt erfüllt. Es ist nämlich nicht möglich, die Signaleinrichtung außer Betrieb zu setzen und gleichzeitig den Schutzschalter einzuschalten, da beim Hineindrücken der Prüftaste 2 und Einschalten des Schutzschalters durch Verdrehen der Schaltwalze 6 gleichzeitig auch die Kontakte 21, 53 geschlossen werden und somit die Prüffunktion aktiviert ist, was den Schalter wieder zum Auslösen bringt.

Weiters ist durch die erfindungsgemäße Anordnung auch gewährleistet, daß die Signaleinrichtung 49 nicht anspricht, wenn der Schutzschalter über die Prüftaste 2 ausgelöst wird, da gleichzeitig die elektrische Anspeisung der Signaleinrichtung 49 unterbrochen wird.

Im übrigen kann der beschriebene Ableiter-Trennschalter standardmäßig aufgebaut sein, d.h. mit dem Ringbandkern 19 ist eine Auslöseeinrichtung 58 verbunden, die über z.B. einen Haltemagnetauslöser 60 auf ein Schaltschloß 59 wirkt, das die Verbindung zwischen Betätigungsknopf 1 und Schaltwalze 6 bildet. Die Auslöseeinrichtung 58 kann, wie ebenfalls an sich bekannt, eine Energiespeicherschaltung aufweisen.

Das in Fig. 7 abgebildete Schaltbild zeigt den Schalter in einem durch einen Fehler in der Hauptleitung (Klemmen 41, 42) ausgeschalteten Zustand, in welchem der Schalter 10, 14 geöffnet und der Schalter 45, 47 geschlossen ist. Die Prüftaste 2 ist nicht gedrückt, so daß die Signaleinrichtung 49 zwischen den Klemmen 43, 44 des Prüfkreises an Spannung liegt. Wird die Prüftaste 2 gedrückt, dann wird durch die Zunge 55 an der prüftaste 2 der Schalter 45, 47 geöffnet und die Signaleinrichtung 49 abgeschaltet. Da sich die Schaltwalze 6 jedoch in der in Fig. 4 gezeigten Stellung befindet, kann der Schalter 21, 53 nicht schließen. In dieser Stellung verrastet die Prüftaste 2 und wird so festgehalten.

In seiner betriebsmäßigen EIN-Stellung hingegen ist der Schalter 10, 14 geschlossen, so daß auch die Hauptleitung zwischen den Anschlußklemmen 41, 42 geschlossen ist. Weder der Schalter 45, 47 noch der Schalter 21, 53 sind geschlossen und der Prüfkreis ist zwischen den Anschlußklemmen 43, 44 vollständig unterbrochen. Die Schaltwalze 6 befindet sich in der in Fig. 4 nicht dargestellten, im Uhrzeigersinn verdrehten Stellung, so daß der Kontakt 21 in einem Bereich angeordnet ist, in welchem er vom beweglichen Kontakt 53 an der Prüftaste 2 kontaktiert werden kann, wenn diese gedrückt wird. Durch den nun im Ringbandkern 19 simulierten Fehlerstrom wird das Schaltschloß 59 betätigt und die Hauptleitung vom Schalter 10, 14 unterbrochen. Durch das Drücken der Prüftaste 2 kann jedoch die Schaltbrücke 45 durch die zwischengeschobene Zunge 55 den Kontakt 47 nicht berühren, so daß die Signaleinrichtung 49 inaktiv bleibt.

Erst durch Betätigen des Betätigungsknopfes 1 wird die Schaltbrücke 45 wieder verschwenkt und somit die Zunge 55 der Prüftaste 2 freigegeben, so daß sich diese unter der Kraft einer Druckknopffeder zurückbewegen kann.

Zusammenfassend kann ein Ausführungsbeispiel der Erfindung wie folgt dargestellt werden:

Der elektrische Schutzschalter weist eine zu schützende Haupt; leitung (Anschlußklemmen 41, 42), einen Prüfkreis (Anschlußklemmen 43, 44), eine Prüftaste 2 und eine elektrische Signaleinrichtung 49 auf. Die elektrische Signaleinrichtung 49 ist im Gehäuse 3, 4 des Schutzschalters angeordnet und kann über einen Schalter 45, 47 mit dem Prüfkreis verbunden und somit aktiviert werden. Dieser Schalter 45, 47 ist mit der Prüftaste 2 gekoppelt (Zunge 55) und wird durch Drücken der Prüftaste 2 geöffnet. In dieser Stellung verrastet 46, 57 die Prüftaste 2 mit dem Schaltmechanismus 59 des Schutzschalters und wird erst wieder freigegeben, wenn der Schutzschalter durch Betätigen des Schaltmechanismus 59 wieder eingeschaltet wird.

## Patentansprüche

1. Elektrischer Schutzschalter für wenigstens eine zu schützende Hauptleitung (41, 42), mit einem gesondert elektrisch angespeisten Prüfkreis (43, 44) mit einer Prüftaste (2), und mit einer elektrischen Signaleinrichtung (49), die bei einer Unterbrechung der Hauptleitung (41, 42) im Fehlerfall anspricht, dadurch gekennzeichnet, daß die Signaleinrichtung (49) über einen Schalter (46, 47, 55) mit dem Prüfkreis (43, 44) elektrisch verbunden ist und daß der Schalter (46, 47, 55) mit der Prüftaste (2) mechanisch verbunden ist.

2. Elektrischer Schutzschalter nach Anspruch 1, dadurch gekennzeichnet, daß die Signaleinrichtung (49) im Gehäuse (3, 4) des Schutzschalters angeordnet ist.

3. Schutzschalter nach Anspruch 1 oder 2, dadurch gekennzeichnet; die Signaleinrichtung (49) in der gedrückten Stellung der Prüftaste (2) vom Prüfkreis (43, 44) getrennt ist.

4. Schutzschalter nach einem der Ansprüche 1 bis 3, dadurch gekennzeichnet, daß die Hauptleitung (41, 42) über einen Transformator (19) mit einem Schaltschloß (59) verbunden ist, welches mit einem Schalter (10, 14) in der Hauptleitung (41, 42) verbunden ist.

5. Schutzschalter nach einem der Ansprüche 1 bis 4, dadurch gekennzeichnet, daß im Prüfkreis (43, 44) zwei zueinander parallele Stränge vorgesehen sind, daß im ersten Strang die Signaleinrichtung (49) angeordnet ist und daß der zweite Strang mit dem Trafo (19) verbunden (51) ist.

6. Schutzschalter nach Anspruch 4 und 5, dadurch gekennzeichnet, daß mit dem Schalter (10, 14) in der Hauptleitung (41, 42) je ein Schalter (21; 45, 47) in jedem Strang verbunden ist und daß immer nur einer der beiden Stränge über seinen Schalter (21; 45, 47) im Prüfkreis (43, 44) zugeschaltet ist.

7. Schutzschalter nach einem der Ansprüche 1 bis 6, dadurch gekennzeichnet, daß mit dem Schalter (55) im ersten Strang ein weiterer Schalter (53) im zweiten Strang vorzugsweise mechanisch verbunden ist, und von der Prüftaste (2) betätigt wird.

8. Schutzschalter nach Anspruch 7, dadurch gekennzeichnet, daß der Schalter (21, 53) im zweiten Strang nur bei geschlossenem Schalter (10, 14) in der Hauptleitung (41, 42) und gedrückter Prüftaste (2) geschlossen ist.

9. Schutzschalter nach einem der Ansprüche 1 bis 8, dadurch gekennzeichnet, daß die Prüftaste (2) im gedrückten Zustand mit dem Schaltmechanismus des Schutzschalters verrastet, wenn sich dieser in der AUS-Stellung befindet.

10. Schutzschalter nach Anspruch 9, dadurch gekennzeichnet, daß die Prüftaste (2) mit der Schaltbrücke (45) des Schalters (45, 47) des ersten Stranges verrastet.

11. Schutzschalter nach einem der Ansprüche 1 bis 10, dadurch gekennzeichnet, daß an der Prüftaste (2) eine Zunge (55) angeordnet ist, welche in der gedrückten Stellung der Prüftaste (2) zwischen der Schaltbrücke (45) und dem dieser zugeordneten, gehäusefesten Kontakt (47) angeordnet ist und diese voneinander trennt.

12. Schutzschalter nach Anspruch 11, dadurch gekennzeichnet, daß an der Zunge (55) eine Ausnehmung (57) vorgesehen ist, welche mit einem Vorsprung (46) an der Schaltbrücke (45) verrastbar ist.

13. Schutzschalter nach einem der Ansprüche 1 bis 13, dadurch gekennzeichnet, daß die Signaleinrichtung (49) ein Summer ist.

## Claims

1. An electrical circuit breaker for a least one main line (41, 42) to be protected, with a test circuit (43, 44) with a separate electrical supply and a test button (2), and an electrical signalling device (49) which makes a fault state response on interruption of the main line (41, 42) in case of a fault condition, characterized in that the signalling device (49) is electrically connected to the test circuit (43, 44) throught a switch (45, 47, 55) and in that the switch (45, 47, 55) is mechanically connected to the test button (2).

2. An electrical circuit breaker according to claim 1, characterized in that the signalling device (49) is disposed in the housing (3, 4) of the circuit breaker.

3. A circuit breaker according to claim 1 or 2, characterized in that the signalling device (49) is isolated from the test circuit (43, 44) in the depressed position of the test button (2).

4. A circuit breaker according to any of claims 1 to 3, characterized in that the main line (41, 44) is connected through a transformer (19) to a latch (59) which is connected to a switch (10, 14) in the main line (41, 42).

5. A circuit breaker according to any of claims 1 to 4, characterized in that two paths parallel to one another are provided in the test circuit (43, 44), in that the signalling device (49) is arranged in the first path and in that the second path is connected (51) to the transformer (19).

6. A circuit breaker according to claims 4 and 5, characterized in that a switch (21; 45, 47) in each path is coupled to the switch (10, 14) in the main line (41, 42) and in that only one of the two paths at a time is connected through its switch (21; 45, 47) into the test circuit (43, 44).

7. A circuit breaker according to any of claims 1 to 6, characterized in that a further switch (53) in the second path is coupled, preferably mechanically, to the switch (55) in the first path and is actuated by the test button (2).

8. A circuit breaker according to claim 7, characterized in that the switch (21, 53) in the second path is closed only with the switch (10, 14) in the main line (41, 42) closed and the test button (2) depressed.

9. A circuit breaker according to any of claims 1 to 8, characterized in that the test button (2) latches in the depressed state with the switch mechanism of the circuit breaker when this is in the OFF position.

10. A circuit breaker according to claim 9, characterized in that the test button (2) latches with the switch bridge (45) of the switch (45, 47) of the first path.

11. A circuit breaker according to any of claims 1 to 10, characterized in that a tongue (55) is arranged on the test button (2) and is disposed in the depressed position of the test button (2) between the switch bridge (45) and the contact (47) associated therewith and fixed relative to the housing and separates these from one another.

12. A circuit breaker according to claim 11, characterized in that a recess (57) is provided in the tongue (55) and can latch with a projection (46) on the switch bridge (45).

13. A circuit breaker according to any of claims 1 to 12, characterized in that the signalling device (49) is a buzzer.

## Revendications

1. Disjoncteur de protection électrique pour au moins une ligne principale (41, 42) à protéger, avec un circuit de contrôle (43, 44) alimenté séparément en courant électrique et comportant une touche de contrôle (2) et avec un dispositif de signal électrique (49) qui réagit lors d'une interruption de la ligne principale (41, 42) due à un défaut, caractérisé par le fait que le dispositif de signal (49) est relié électriquement au circuit de contrôle (43, 44) par un commutateur (45, 47, 55) et que le commutateur (45, 47, 55) est relié mécaniquement à la touche de contrôle (2).

2. Disjoncteur de protection électrique selon la revendication 1, caractérisé par le fait que le dispositif de signal (49) est disposé dans le boîtier (3, 4) du disjoncteur de protection.

3. Disjoncteur de protection électrique selon la revendication 1 ou 2, caractérisé par le fait que le dispositif de signal (49), dans la position enfoncée de la touche de contrôle (2), est coupé du circuit de contrôle (43, 44).

4. Disjoncteur de protection électrique selon une des revendications 1 à 3, caractérisé par le fait que la ligne principale (41, 42) est connectée par l'intermédiaire d'un transformateur (19) à un verrou de maintien (59) qui est connecté à un interrupteur (10, 14) dans la ligne principale (41, 42).

5. Disjoncteur de protection électrique selon une des revendications 1 à 4, caractérisé par le fait que deux branches mutuellement parallèles sont prévues dans le circuit de contrôle (43, 44), par le fait que dispositif de signal (49) est disposé dans la première branche et que la la deuxième branche est connectée (51) au transformateur (19).

6. Disjoncteur de protection électrique selon les revendications 4 et 5, caractérisé par le fait qu'un commutateur (21; 45, 47) dans chacune des branches est connecté au commutateur (10, 14) dans la ligne principale (41, 42) et par le fait que chaque fois seule une des deux branches est insérée dans le circuit de contrôle (43, 44) par l'intermédiaire de son commutateur (21; 45, 47).

7. Disjoncteur de protection électrique selon une des revendications 1 à 6, caractérisé par le fait qu'un commutateur (53) supplémentaire dans la deuxième branche est relié, de préférence mécaniquement, au commutateur (55) dans la première branche et est actionné par la touche de contrôle (2).

8. Disjoncteur de protection électrique selon la revendication 7, caractérisé par le fait que le commutateur (21, 53) dans la deuxième branche n'est fermé que lorsque le commutateur (10, 14) dans la ligne principale (41, 42) est fermé et la touche de contrôle (2) enfoncée.

9. Disjoncteur de protection électrique selon une des revendications 1 à 8, caractérisé par le fait que la touche de contrôle (2), en position enfoncée, s'encliquète avec le mécanisme de commutation du disjoncteur de protection, lorsque celui-ci se trouve dans la position "Arrêt".

10. Disjoncteur de protection électrique selon la revendication 9, caractérisé par le fait que la touche de contrôle (2) s'encliquète sur le pontet (45) du commutateur (45, 47) de la première branche.

11. Disjoncteur de protection électrique selon une des revendications 1 à 10, caractérisé par le fait qu'une languette (55) est disposée sur la touche de contrôle (2), laquelle languette, dans la position enfoncée de la touche de contrôle (2), est disposée entre le pontet (45) et le contact fixe (47) associé au boîtier et sépare ces deux éléments l'un de l'autre.

12. Disjoncteur de protection électrique selon la revendication 11, caractérisé par le fait qu'un évidement (57) est prévu sur la languette (55) lequel évidement peut s'encliqueter avec une saillie (46) sur le pontet de commutateur (45).

13. Disjoncteur de protection électrique selon une des revendications 1 à 12, caractérisé par le fait que le dispositif de signal (49) est un ronfleur.
